# EUROPEAN PATENT APPLICATION

(11) **EP 4 822 946 A1**
(43) Date of publication of application: **14.10.2026**
(21) Application number: 26154049.6
(22) Date of filing: 26.01.2026
(51) Int. Cl.: H02K 1/18, H02K 5/08, H02K 15/14

(54) **STATOR UNIT, METHOD FOR MANUFACTURING STATOR UNIT, AND ELECTRIC VALVE**

(30) Priority: 11.04.2025 JP 2025065553
(71) Applicant: Fujikoki Corporation, Tokyo 158-0082 (JP)
(72) Inventor: Hayakawa, Junya, 1580082 Setagaya-ku, Tokyo (JP); Arai, Yusuke, 1580082 Setagaya-ku, Tokyo (JP)
(74) Representative: Grünecker Patent- und Rechtsanwälte PartG mbB

(57) **Abstract**

A stator unit 100 includes a stator main body 10 and an attachment part 50 that attaches the stator main body 10 to an electric valve main body. The stator main body 10 includes an inner mold portion including a stator assembly having a stator yoke and a stator coil, and an outer mold portion covering the inner mold portion and a portion of the attachment part 50. The attachment part 50 includes an engaging portion 51 that engages with the electric valve main body, and a plate-like base portion 52 that supports the engaging portion 51. The base portion 52 has a first supported surface on an outer side and a second supported surface on an inner side. The first supported surface and the second supported surface are exposed from the outer mold portion.

## Description

### TECHNICAL FIELD

The present disclosure relates to a stator unit, a method for manufacturing a stator unit, and an electric valve.

### BACKGROUND ART

A manufacturing method of a stator unit is known, which includes performing inner molding on a stator assembly in which a bobbin around which a stator coil is wound is assembled to a stator yoke and a power supply terminal for supplying power to the bobbin, and performing outer molding after the inner molding so as to cover an outer circumferential portion of an inner mold portion (for example, Patent Literature 1).

### CITATION LIST

### PATENT LITERATURE

Patent Literature 1: JP 2018-164398 A

### SUMMARY OF INVENTION

### TECHNICAL PROBLEM

As a configuration for assembling a stator main body to a valve main body after inner molding and outer molding, a structure is known in which an attachment plate fixed on the stator main body side is fixed on the valve main body side by screwing, resin welding, or the like.

However, in screwing or resin welding via the attachment plate, there is a problem in that it is necessary to provide the stator main body with a screw receiving portion, a welding portion, or the like, and that the stator main body increases in size in order to secure sufficient fixing strength.

An object of the present disclosure is to provide a stator unit having high fixing strength, a method for manufacturing a stator unit having high fixing strength, and an electric valve having high fixing strength.

### SOLUTION TO PROBLEM

A stator unit according to an aspect of the present disclosure is
a stator unit comprising a stator main body and an attachment part configured to attach the stator main body to an electric valve main body,
wherein the stator main body comprises:
   an inner mold portion including a stator assembly having a stator yoke and a stator coil; and
   an outer mold portion covering the inner mold portion and a portion of the attachment part,
   wherein the attachment part includes an engaging portion configured to engage with the electric valve main body, and a base portion having a plate shape and supporting the engaging portion,
   wherein the base portion has a first supported surface on an outer side and a second supported surface on an inner side, and
   wherein the first supported surface and the second supported surface are exposed from the outer mold portion.

A method for manufacturing a stator unit according to an aspect of the present disclosure is
a method for manufacturing a stator unit including a stator main body including a stator assembly having a stator yoke and a stator coil, and an attachment part including an engaging portion configured to engage with an electric valve main body and a base portion having a plate shape and supporting the engaging portion, the attachment part being configured to attach the stator main body to the electric valve main body, the method comprising:
an inner molding step of molding an internal region of the stator assembly, thereby forming an inner mold portion including the stator assembly; and
an outer molding step of, after the inner molding step, performing molding so as to cover the inner mold portion and a portion of the attachment part, thereby forming an outer mold portion,
wherein in the outer molding step, an outer support portion supports a first supported surface located on an outer side of the base portion, and an inner support portion supports a second supported surface located on an inner side of the base portion, and
wherein the stator main body including the inner mold portion and the outer mold portion is formed by the outer molding step

An electric valve according to an aspect of the present disclosure is
ane electric valve including a stator main body, an electric valve main body, and an attachment part configured to attach the stator main body to the electric valve main body,
wherein the stator main body comprises:
   an inner mold portion including a stator assembly having a stator yoke and a stator coil; and
   an outer mold portion covering the inner mold portion and a portion of the attachment part,
   wherein the electric valve main body includes an engaged portion,
   wherein the attachment part includes an engaging portion configured to engage with the engaged portion, and a base portion having a plate shape and supporting the engaging portion,
   wherein the base portion has a first supported surface on an outer side and a second supported surface on an inner side, and
   wherein the first supported surface and the second supported surface are exposed from the outer mold portion.

### ADVANTAGEOUS EFFECTS OF INVENTION

According to the present disclosure, a stator unit having high fixing strength, a method for manufacturing a stator unit having high fixing strength, and an electric valve having high fixing strength can be provided.

### BRIEF DESCRIPTION OF DRAWINGS

Fig. 1 is a perspective view of a stator unit according to a first embodiment of the present disclosure.
Fig. 2 is a cross-sectional view of an electric valve according to the first embodiment of the present disclosure.
Fig. 3 is a perspective view of an attachment part according to the first embodiment of the present disclosure, as viewed from a bottom surface side.
Fig. 4 is a bottom view of the stator unit according to the first embodiment of the present disclosure.
Fig. 5 is a perspective view of an attachment part according to a second embodiment of the present disclosure, as viewed from a bottom surface side.
Fig. 6 is a cross-sectional view of an electric valve according to a third embodiment of the present disclosure.
Fig. 7 is a perspective cross-sectional view illustrating a state in which the attachment part according to the first embodiment of the present disclosure is mounted to a lower mold and a core of a mold for outer molding.
Fig. 8 is a cross-sectional view illustrating a state in which the attachment part and the stator unit before outer molding according to the first embodiment of the present disclosure are mounted to the mold for outer molding.

### DESCRIPTION OF EMBODIMENTS

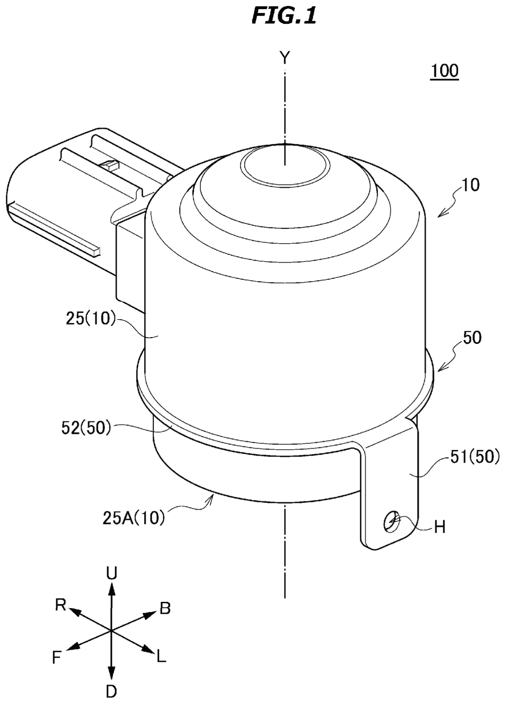

Hereinafter, embodiments of the present invention will be described with reference to the drawings. Note that for components having the same reference signs as those already described with respect to the embodiments, the description thereof is omitted for convenience of explanation. In addition, for convenience of description, the dimension of each member illustrated in the drawings may be different from the dimension of each actual member. Note that, in the following description of the embodiments, upward, downward, leftward, rightward, forward, and rearward directions indicate directions in the planes of Figs. 1 to 8, and are respectively denoted by U, D, L, R, F, and B. However, the technical scope of the present disclosure shall not be construed as being limited thereby.

### <Stator Unit and Electric Valve>

### <First Embodiment>

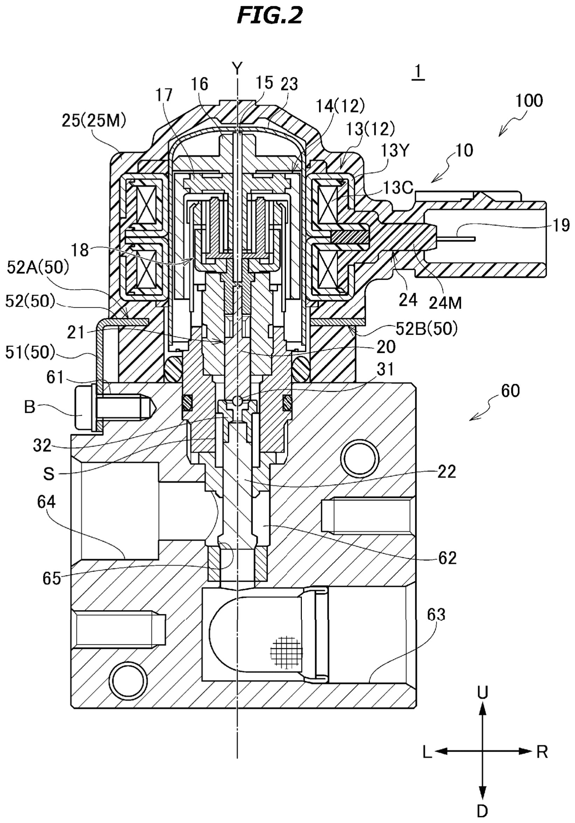

Fig. 1 is a perspective view of a stator unit 100 according to a first embodiment of the present disclosure. Fig. 2 is a cross-sectional view of an electric valve 1 according to the first embodiment of the present disclosure, and illustrates a state in which the stator unit 100 illustrated in Fig. 1 is assembled to a valve main body 60 (also referred to as an electric valve main body). Note that Fig. 2 illustrates a closed state of a valve body 22.

As illustrated in Fig. 1, the stator unit 100 includes a stator main body 10 and an attachment part 50. The stator main body 10 is a cylindrical member and has a circular bottom surface 25A. The attachment part 50 is, for example, a metal member and includes a base portion 52 and an engaging portion 51. As illustrated in Fig. 2, the attachment part 50 allows the stator main body 10 to be attached to the valve main body 60 via the engaging portion 51.

As illustrated in Fig. 1, the base portion 52 has, for example, a ring shape, and a part of the base portion 52 is incorporated into the stator main body 10, and thus the stator main body 10 and the attachment part 50 are integrated. An outer diameter of base portion 52 is larger than a diameter of the bottom surface 25A. The engaging portion 51 is a plate-like member extending in a direction of a central axis Y, and is provided in a cantilevered manner on an outer side of the base portion 52. The engaging portion 51 has a fixing hole H, and is fixed to a groove-like engaged portion 61 of the valve main body 60 by passing a screw B through the fixing hole H (see Fig. 2).

As illustrated in Fig. 2, the stator main body 10 includes an outer mold portion 25, and within the outer mold portion 25, an inner mold portion 24, a rotor 14, a valve shaft 15, a support member 16, a rotor support portion 17, a planetary gear mechanism 18, a screw driving member 20, and a can 23 are provided.

The inner mold portion 24 includes a stator assembly 13 and a power supply terminal 19. The stator assembly 13 includes a plurality of stator yokes 13Y and a stator coil 13C arranged inside each stator yoke 13Y. The inner mold portion 24 is a portion in which an internal region of the stator assembly 13 and a portion of the power supply terminal 19 are molded with a first mold resin 24M and integrated. The inner mold portion 24 and the can 23 are covered by the outer mold portion 25 made of a second mold resin 25M. In addition, a part of the base portion 52 of the attachment part 50 is covered by the outer mold portion 25. That is, the stator main body 10 and the attachment part 50 are integrated, and thus the fixing strength of the attachment part 50 can be increased. Note that the first mold resin 24M and the second mold resin 25M may be the same resin material or different resin materials.

The stator assembly 13 and the rotor 14 constitute a motor 12. The motor 12 is, for example, a stepping motor. The rotor 14 is rotatably arranged inside the stator assembly 13. The valve shaft 15 is connected to the rotor 14 and is arranged inside the rotor 14. The support member 16 supports an upper end of the valve shaft 15. By causing a drive current to flow through the stator coils 13C via the power supply terminal 19 from a control board (not illustrated), the rotor 14 is rotationally controlled about the central axis Y. Rotational force of the rotor 14 is transmitted to the planetary gear mechanism 18 via the rotor support portion 17. The rotor 14, the valve shaft 15, the support member 16, the rotor support portion 17, and the planetary gear mechanism 18 are arranged inside the can 23.

The planetary gear mechanism 18 is a reduction mechanism that reduces rotational speed of the rotor 14 and transmits rotational force to a screw driving member 20 located below the planetary gear mechanism 18. The planetary gear mechanism 18 is composed of, for example, a fixed ring gear, a sun gear, a plurality of planetary gears, a carrier, an output gear, an output shaft, and the like. In the present embodiment, the rotor support portion 17 is integrally provided with the sun gear.

The screw driving member 20 is linearly driven in the direction of the central axis Y by a transmission mechanism 21 using the rotational force transmitted from the planetary gear mechanism 18 as a power source. The valve body 22 is connected to a lower end portion of the screw driving member 20. The linear driving of the screw driving member 20 is transmitted to the valve body 22 via a ball-shaped joint 31 and a spring receiving member 32.

The valve main body 60 includes therein a valve chamber 62, an inlet passage 63 that allows a fluid to flow into the valve chamber 62, and an outlet passage 64 that allows the fluid to flow out. A valve seat 65 is formed at an upper end portion of an opening portion of the inlet passage 63 into the valve chamber 62.

The valve body 22 is driven in the direction of the central axis Y, thereby being seated on or separated from the valve seat 65 to open and close the outlet passage 64. Therefore, the fluid flowing in from the inlet passage 63 flows out to the outlet passage 64 via the valve chamber 62 when the valve body 22 is in an open state, and remains in the valve chamber 62 without flowing out to the outlet passage 64 when the valve body 22 is in a closed state. A compression coil spring S is provided below the spring receiving member 32, and by applying an urging force to the valve body 22, the valve body 22 can reliably transition to an open state during a valve opening operation.

### <Attachment Part According to First Embodiment>

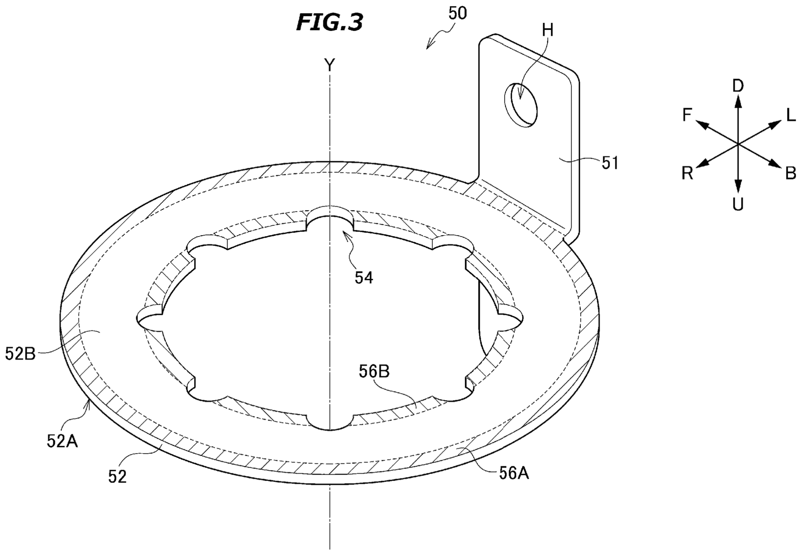

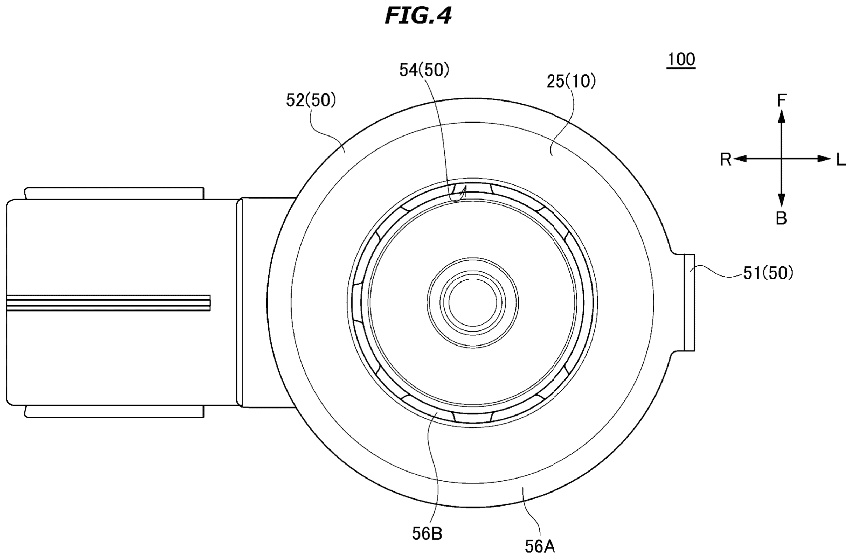

Fig. 3 is a perspective view of the attachment part 50 according to the first embodiment of the present disclosure, as viewed from a bottom surface side. Fig. 4 is a bottom view of the stator unit 100 according to the first embodiment of the present disclosure.

As illustrated in Figs. 2 and 3, the base portion 52 is a plate-like member having an upper surface 52A (also referred to as a first surface) facing the stator assembly 13 and a lower surface 52B (also referred to as a second surface) that is a surface on an opposite side to the upper surface 52A. Note that, in Fig. 3, the upper surface 52A is shown on a lower side of the attachment part 50, and the lower surface 52B is shown on an upper side of the attachment part 50. The base portion 52 has a first supported surface 56A on an outer side and a second supported surface 56B on an inner side. In the example of Fig. 3, the base portion 52 has a ring shape, the first supported surface 56A is located on a radially outer side of the lower surface 52B, and the second supported surface 56B is located on a radially inner side of the lower surface 52B. In this case, the first supported surface 56A is also referred to as an outer-diameter supported surface, and the second supported surface 56B is also referred to as an inner-diameter supported surface.

As illustrated in Fig. 4, in a state in which a part of the base portion 52 is incorporated into the stator main body 10, the first supported surface 56A is exposed outward from the outer mold portion 25, and the second supported surface 56B is exposed inward from the outer mold portion 25.

In this manner, the plate-like attachment part 50 is molded such that the inner and outer sides of the base portion 52 of the attachment part 50 are exposed, and thus the inner and outer sides of the attachment part 50 can be supported by a mold during molding of the outer mold portion 25 described below. As a result, deformation of the attachment part 50 due to an injection pressure of a mold resin can be suppressed, and the fixing strength of the attachment part 50 can be increased.

In addition, as illustrated in Fig. 3, an inner circumference of the base portion 52 is provided with a plurality of penetrating portions 54 penetrating from the upper surface 52A to the lower surface 52B at approximately equal intervals in a circumferential direction. Each of the penetrating portions 54 illustrated in Fig. 3 has a notched shape recessed toward a radially outward direction. During molding of the outer mold portion 25, the second mold resin 25M enters the penetrating portions 54, and the stator main body 10 and the attachment part 50 are integrated while the penetrating portions 54 and the second mold resin 25M engage with each other.

In this manner, the base portion 52 of the attachment part 50 is provided with the penetrating portions 54, and thus during molding of the outer mold portion 25, a mold resin can be easily injected to the upper surface 52A side (the stator assembly 13 side) of the base portion 52 and the lower surface 52B side (the opposite side of the stator assembly 13) of the base portion 52. As a result, deformation of the attachment part 50 due to an injection pressure of the mold resin can be suppressed, and the fixing strength of the attachment part can be increased.

In addition, since the second mold resin 25M is injected into internal spaces of the penetrating portions 54 during molding of the outer mold portion 25, the penetrating portions 54 restrict rotation of the attachment part 50 of the stator unit 100 about the central axis Y with respect to the outer mold portion 25. Accordingly, the stator main body 10 and the attachment part 50 are fixed to each other in a rotational direction about the central axis Y.

In this manner, the base portion 52 of the attachment part 50 is provided with the penetrating portions 54, and thus the fixing strength of the stator unit 100 in the rotational direction about the central axis Y can be improved.

### <Attachment Part According to Second Embodiment>

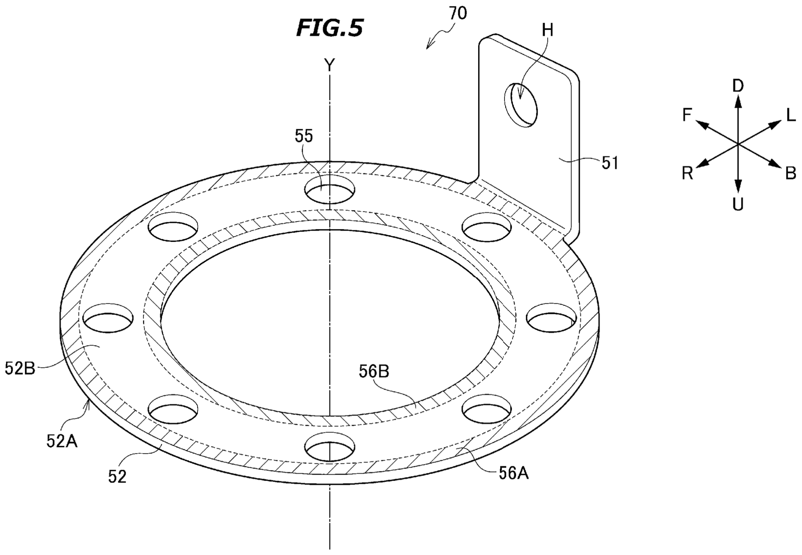

Fig. 5 is a cross-sectional view of an attachment part 70 according to a second embodiment of the present disclosure, as viewed from a bottom surface side. Note that, in Fig. 5, the upper surface 52A is shown on a lower side of the attachment part 50, and the lower surface 52B is shown on an upper side of the attachment part 50.

As illustrated in Fig. 5, the base portion 52 is provided with a plurality of penetrating portions 55 penetrating from the upper surface 52A to the lower surface 52B at approximately equal intervals in the circumferential direction. The penetrating portions 55 illustrated in Fig. 5 have a cylindrical shape. Similarly to the penetrating portions 54 according to the first embodiment illustrated in Fig. 3, during molding of the outer mold portion 25, the second mold resin 25M enters the penetrating portions 55, and the stator main body 10 and the attachment part 70 are integrated while the penetrating portions 55 and the second mold resin 25M engage with each other. As a result, deformation of the attachment part 70 due to an injection pressure of the mold resin can be suppressed, and the fixing strength of the attachment part can be increased.

In addition, similarly to the penetrating portions 54 of the attachment part 50 according to the first embodiment illustrated in FIG. 3, since the second mold resin 25M is injected into internal spaces of the penetrating portions 55 of the attachment part 70 during molding of the outer mold portion 25, the penetrating portions 55 restrict rotation of the attachment part 70 of the stator unit 100 about the central axis Y with respect to the outer mold portion 25. Accordingly, the stator main body 10 and the attachment part 70 are fixed to each other in a rotational direction about the central axis Y.

### <Electric Valve According to Third Embodiment>

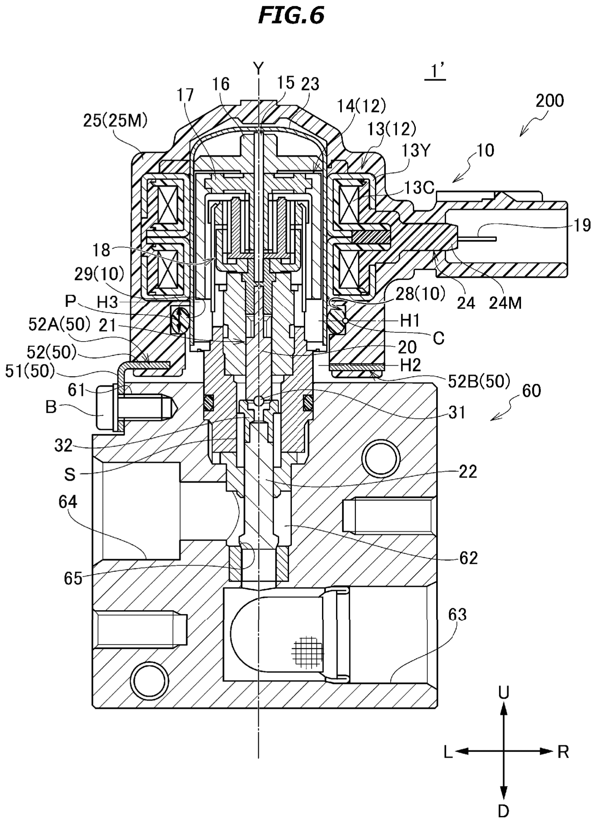

Fig. 6 is a cross-sectional view of an electric valve 1' according to a third embodiment of the present disclosure. The electric valve 1' according to the third embodiment is an electric valve assembled using the attachment part 50 according to the first embodiment or the attachment part 70 according to the second embodiment described above. Note that Fig. 6 illustrates a closed state of the valve body 22.

As illustrated in Fig. 6, the stator main body 10 has an internal path P formed by an inner surface 28. In the internal path P, a sealing member 29 for sealing the internal path P is arranged. The sealing member 29 has, for example, a ring shape having a central axis oriented in the direction of the central axis Y, and prevents a fluid flowing in from the inlet passage 63 from entering the motor 12 side. Here, a region where the internal path P and the sealing member 29 are in contact with each other is defined as a contact region C. In addition, a position of the contact region C in the direction of the central axis Y is defined as H1, a position of the upper surface 52A of the base portion 52 of the attachment part 50 in the direction of the central axis Y is defined as H2, and a position of a lower surface of the stator assembly 13 in the direction of the central axis Y is defined as H3.

As illustrated in Fig. 6, the position H1 of the contact region C is located between the position H2 of the upper surface 52A of the base portion 52 of the attachment part 50 and the position H3 of the lower surface of the stator assembly 13 in the direction of the central axis Y. Accordingly, even if a water drop enters the internal path P along the base portion 52, the water drop can be prevented from entering the stator assembly 13 by the sealing member 29 located above the base portion 52.

### <Method For Manufacturing Stator Unit>

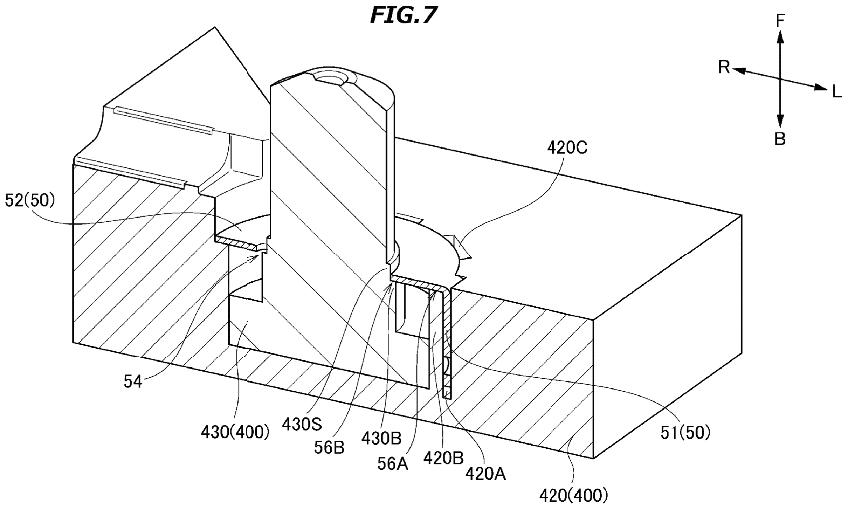

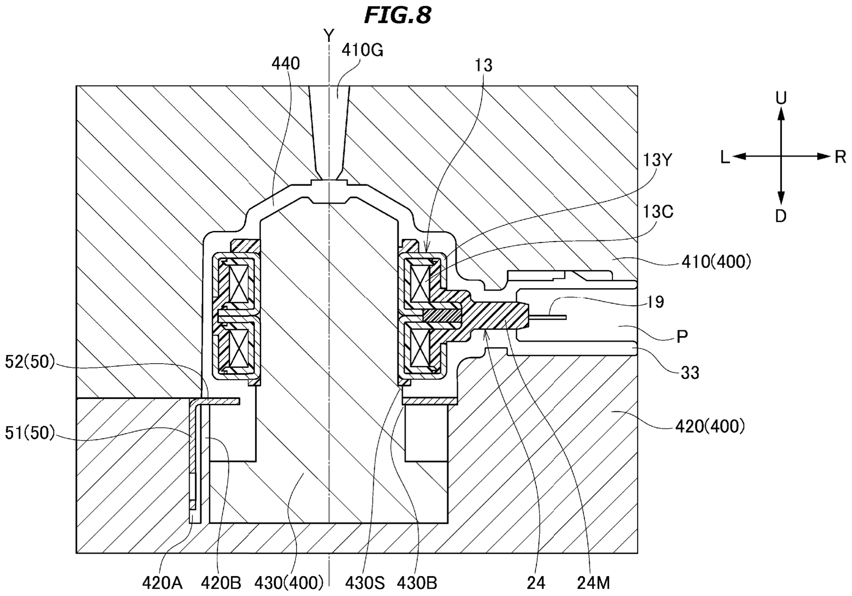

Next, a method for manufacturing the stator unit 100 according to the present embodiment will be described with reference to Figs. 7 and 8. Fig. 7 is a perspective cross-sectional view illustrating a state in which the attachment part 50 according to the first embodiment of the present disclosure is mounted to a lower mold 420 and a core 430 of a mold for outer molding 400. Fig. 8 is a cross-sectional view illustrating a state in which the attachment part 50 and the stator unit 100 before outer molding according to the first embodiment of the present disclosure are mounted to the mold for outer molding 400.

First, in an inner molding step, the stator assembly 13 including the stator yokes 13Y and the stator coils 13C and the power supply terminal 19 are mounted to a mold for inner molding (not illustrated), and the first mold resin 24M is injected so as to cover an internal region of the stator assembly 13 and a portion of the power supply terminal 19, thereby performing molding (not illustrated). As a result, the inner mold portion 24 is formed.

Next, in an outer molding step after the inner molding step, as illustrated in Fig. 7, the attachment part 50 is mounted to the lower mold 420 and the core 430 of the mold for outer molding 400.

The lower mold 420 includes a groove portion 420A, and an outer support portion 420B for supporting the first supported surface 56A of the base portion 52. The groove portion 420A and the outer support portion 420B are positioned adjacent to each other in a direction perpendicular to the central axis Y. The core 430 secures a space for assembling the can 23 and the rotor 14 and the like arranged inside the can 23, after the outer molding. Additionally, the core 430 has a substantially cylindrical shape and includes an inner support portion 430B and a step portion 430S. A height of an upper surface of the outer support portion 420B and a height of an upper surface of the inner support portion 430B are substantially the same. When mounting the attachment part 50 to the lower mold 420 and the core 430 of the mold for outer molding 400, the engaging portion 51 of the attachment part 50 is inserted and fitted into the groove portion 420A, and the first supported surface 56A of the base portion 52 is supported by the outer support portion 420B. Additionally, the inner mold portion 24 is supported by the step portion 430S.

In this manner, the outer support portion 420B of the lower mold 420 supports the first supported surface 56A of the attachment part 50, and the inner support portion 430B of the core 430 supports the second supported surface 56B of the attachment part 50, and thus deformation of the attachment part 50 due to the injection pressure of the mold resin can be suppressed, and the fixing strength of the attachment part 50 can be increased.

Next, as illustrated in Fig. 8, the inner mold portion 24 is mounted to the core 430 by supporting the inner mold portion 24 on the step portion 430S of the core 430. Additionally, the upper mold 410 is joined to the lower mold 420, and a slide pin is slid and mounted to the power supply terminal 19. The upper mold 410 includes a gate 410G, which is a resin injection port. The upper mold 410 and the lower mold 420 form a cavity 440 for forming a resin layer around the inner mold portion 24 and the attachment part 50. The slide pin P is slid and mounted to the power supply terminal 19, thereby forming a connector portion 33 of the power supply terminal 19.

With the attachment part 50 and the inner mold portion 24 mounted to the mold for outer molding 400, the second mold resin 25M is injected into the cavity 440 from the gate 410G. As a result, the outer mold portion 25 covering the inner mold portion 24 and a portion of the attachment part 50 is formed, and at the same time, the stator main body 10 including the inner mold portion 24 and the outer mold portion 25 is formed, resulting in the formation of the stator unit 100 in which the base portion 52 and the stator main body 10 are integrated.

Additionally, as illustrated in Fig. 7, the lower mold 420 may include a resin inlet passage 420C through which the second mold resin 25M is introduced. Accordingly, deformation of the attachment part 50 due to the injection pressure of the mold resin can be suppressed.

Although the embodiments of the present disclosure have been described, it is to be understood that the technical scope of the present disclosure is not to be construed as limited by the descriptions of the present embodiments. It is understood by one skilled in the art that the present embodiments are just examples and the embodiments can be variously changed within the scope of the invention recited in the claims. The technical scope of the present disclosure should be determined based on the scope of the invention defined in the claims and the scope of its equivalents.

For example, the method for manufacturing a stator unit described above is a method for manufacturing the stator unit 100 according to the first embodiment illustrated in Fig. 1, but is also applicable as a method for manufacturing the stator unit 200 of the electric valve 1' according to the third embodiment illustrated in Fig. 6. In addition, instead of the attachment part 50 according to the first embodiment illustrated in FIG. 3, the attachment part 70 according to the second embodiment illustrated in FIG. 5 may be used.

In addition, the attachment part 50 according to the first embodiment and the attachment part 70 according to the second embodiment each have eight penetrating portions 54, 55, but the number is not limited thereto.

In addition, the base portion 52 of the attachment part 50 according to the first embodiment of the present disclosure and the base portion 52 of the attachment part 70 according to the second embodiment may have a C-shape in which a portion of the ring shape is missing.

In addition, the valve main body 60 (main body block) according to the embodiments of the present disclosure has a configuration in which a block including the valve chamber 62 and a block including the inlet passage 63 and the outlet passage 64 are integrated, but the block including the valve chamber 62 and the block including the inlet passage 63 and the outlet passage 64 may be configured as separate bodies.

In addition, the electric valves 1 and 1' according to the embodiments of the present disclosure are electric valves using a reduction mechanism, but may be direct-acting electric valves without using a reduction mechanism.

In addition, the present invention is applicable to an electric valve having a configuration in which the stator main body 10 is mounted to the can 23.

### REFERENCE SIGNS LIST

1, 1': electric valve
10: stator main body
12: motor
13: stator assembly
13Y: stator yoke
13C: stator coil
14: rotor
15: valve shaft
16: support member
17: rotor support portion
18: planetary gear mechanism
19: power supply terminal
20: screw driving member
21: transmission mechanism
22: valve body
23: can
24: inner mold portion
24M: first mold resin
25: outer mold portion
25A: bottom surface
25M: second mold resin
31: ball-shaped joint
32: spring receiving member
33: connector portion
50, 70: attachment part
51: engaging portion
52: base portion
52A: upper surface
52B: lower surface
54, 55: penetrating portion
56A: first supported surface
56B: second supported surface
60: valve main body
61: engaged portion
62: valve chamber
63: inlet passage
64: outlet passage
65: valve seat
100, 200: stator unit
400: mold for outer molding
410: upper mold
410G: gate
420: lower mold
420A: groove portion
420B: outer support portion
420C: resin inlet passage
430: core
430B: inner support portion
430S: step portion
440: cavity
P: slide pin

## Claims

1. A stator unit including a stator main body and an attachment part configured to attach the stator main body to an electric valve main body,
wherein the stator main body comprises:
an inner mold portion including a stator assembly having a stator yoke and a stator coil; and
an outer mold portion covering the inner mold portion and a portion of the attachment part,
wherein the attachment part includes an engaging portion configured to engage with the electric valve main body, and a base portion having a plate shape and supporting the engaging portion,
wherein the base portion has a first supported surface on an outer side and a second supported surface on an inner side, and
wherein the first supported surface and the second supported surface are exposed from the outer mold portion.

2. The stator unit according to claim 1,
wherein the base portion has a ring shape,
wherein the first supported surface is an outer-diameter supported surface located on a radially outer side, and
wherein the second supported surface is an inner-diameter supported surface located on a radially inner side.

3. The stator unit according to claim 2,
wherein the base portion has a first surface facing the stator assembly and a second surface that is a surface on an opposite side to the first surface, and
wherein the second surface includes the outer-diameter supported surface and the inner-diameter supported surface.

4. The stator unit according to claim 1,
wherein the base portion includes a penetrating portion into which the outer mold portion enters.

5. The stator unit according to claim 4,
wherein the stator main body has a cylindrical shape, and
wherein the penetrating portion restricts rotation of the stator main body about a central axis with respect to the outer mold portion.

6. The stator unit according to claim 4,
wherein the penetrating portion has a notched shape or a cylindrical shape.

7. The stator unit according to claim 1,
wherein the stator main body has a cylindrical shape and includes an internal path formed by an inner surface and a sealing member sealing the internal path, and
wherein a region where the inner surface and the sealing member are in contact with each other is located between the stator assembly and the base portion in a direction of a central axis of the stator main body.

8. A method for manufacturing a stator unit including a stator main body including a stator assembly having a stator yoke and a stator coil, and an attachment part including an engaging portion configured to engage with an electric valve main body and a base portion having a plate shape and supporting the engaging portion, the attachment part being configured to attach the stator main body to the electric valve main body, the method comprising:
an inner molding step of molding an internal region of the stator assembly, thereby forming an inner mold portion including the stator assembly; and
an outer molding step of, after the inner molding step, performing molding so as to cover the inner mold portion and a portion of the attachment part, thereby forming an outer mold portion,
wherein in the outer molding step, an outer support portion supports a first supported surface located on an outer side of the base portion, and an inner support portion supports a second supported surface located on an inner side of the base portion, and
wherein the stator main body including the inner mold portion and the outer mold portion is formed by the outer molding step.

9. An electric valve including a stator main body, an electric valve main body, and an attachment part configured to attach the stator main body to the electric valve main body,
wherein the stator main body comprises:
an inner mold portion including a stator assembly having a stator yoke and a stator coil; and
an outer mold portion covering the inner mold portion and a portion of the attachment part,
wherein the electric valve main body includes an engaged portion,
wherein the attachment part includes an engaging portion configured to engage with the engaged portion, and a base portion having a plate shape and supporting the engaging portion,
wherein the base portion has a first supported surface on an outer side and a second supported surface on an inner side, and
wherein the first supported surface and the second supported surface are exposed from the outer mold portion.
